Europäisches Patentamt

(19) European Patent Office

Office européen des brevets

(11) Numéro de publication : **0 463 895 A1**

# (12) DEMANDE DE BREVET EUROPEEN

(21) Numéro de dépôt : **91401355.2**

(22) Date de dépôt : **27.05.91**

(51) Int. Cl.⁵ : **H02K 7/116,** H02K 7/108, H02K 1/30, H02K 13/00

(30) Priorité : **29.06.90 FR 9008284**

(43) Date de publication de la demande :
**02.01.92 Bulletin 92/01**

(84) Etats contractants désignés :
**DE GB IT**

(71) Demandeur : **AUTOMOBILES PEUGEOT**
**75, avenue de la Grande Armée**
**F-75116 Paris (FR)**
Demandeur : **AUTOMOBILES CITROEN**
**62 Boulevard Victor-Hugo**
**F-92200 Neuilly-sur-Seine (FR)**

(72) Inventeur : **Cornu, François**
**39 Bis Rue du Professeur Vaillant**
**F-95240 Cormeilles en Parisis (FR)**

(74) Mandataire : **Durand, Yves Armand Louis et al**
**CABINET WEINSTEIN 20, Avenue de**
**Friedland**
**F-75008 Paris (FR)**

(54) **Moteur électrique de traction à courant continu pour véhicule automobile.**

(57) Le moteur est caractérisé en ce qu'il comprend au moins un flasque (17 ; 18) solidaire de l'arbre moteur (6) et muni de moyens (19, 20, 21) de centrage et de maintien du paquet (7) de tôles rotoriques, le flasque (17 ; 18) et les moyens de centrage et de maintien (19, 20, 21) étant disposés relativement à l'arbre moteur (6) de façon à ménager dans le carter (2) un espace (E) permettant de loger un réducteur ou un embrayage électromagnétique.
La présente invention trouve application aux véhicules électriques.

FIG. 2

EP 0 463 895 A1

La présente invention concerne un moteur électrique de traction à courant continu destiné notamment à un véhicule automobile.

Le problème qui se pose actuellement pour les véhicules automobiles électrique est leur masse. En effet, ces véhicules doivent transporter une masse importante de batteries d'alimentation du moteur électrique lui permettant d'obtenir des performances satisfaisantes. Il est donc nécessaire de réaliser des travaux d'allégement des véhicules électriques afin d'allonger leur rayon d'action et leurs capacités d'accélération malgré une puissance du moteur électrique inchangée. Ces allégements portent sur tous les composants du véhicule et en particulier sur le moteur de celui-ci.

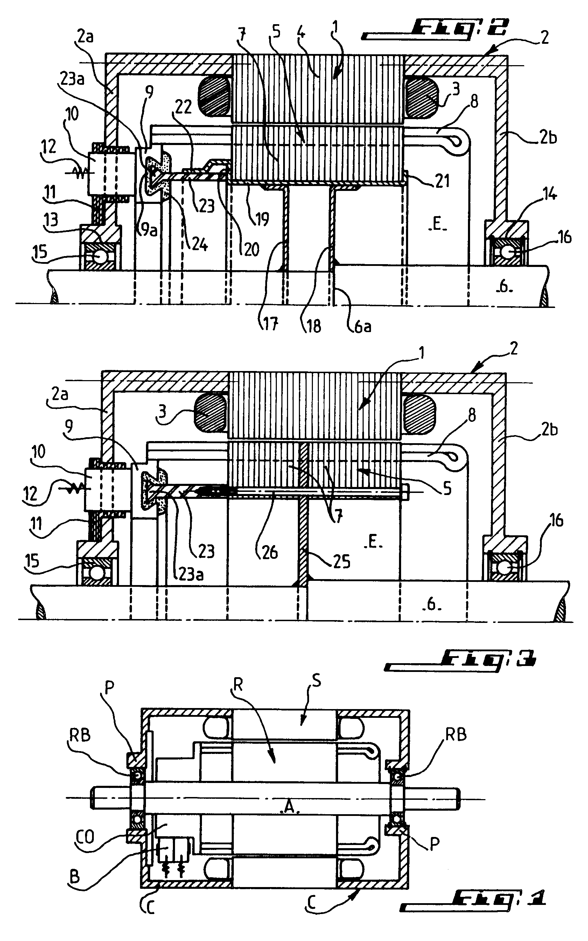

La figure 1 montre un moteur électrique conventionnel constitué d'un ensemble rotor R, d'un ensemble stator S, d'un ensemble collecteur CO et des balais B avec l'arbre moteur A supportant l'ensemble rotor R maintenu par deux paliers P des carters C par intermédiaire de roulements à billes RB. Selon ce moteur connu, l'accouplement avec un dispositif tel qu'un réducteur ne peut être réalisé qu'à l'extérieur du carter C, ce qui impose un encombrement en longueur assez important peu compatible avec un montage sur un véhicule électrique.

La présente invention propose ainsi un moteur électrique de traction conçu de façon à alléger le véhicule automobile équipé d'un tel moteur tout en permettant une réduction du temps de montage et surtout une diminution de l'encombrement en longueur du moteur.

Pour cela, le moteur électrique de traction conforme à l'invention, du type comprenant un ensemble stator solidaire d'un carter, un ensemble rotor solidaire de l'arbre moteur comprenant un paquet de tôles rotoriques jointives et un ensemble collecteur-balais, est caractérisé en ce qu'il comprend au moins un flasque solidaire de l'arbre moteur et muni de moyens de centrage et de maintien des tôles rotoriques coaxialement à l'arbre moteur et en ce que le flasque et les moyens de centrage et de maintien sont disposés relativement à l'arbre moteur de façon à ménager dans le carter, concentriquement à l'arbre moteur, un espace permettant de loger un dispositif d'accouplement, tel qu'un réducteur ou un embrayage électromagnétique.

Selon une caractéristique de l'invention, l'arbre de sortie du dispositif d'accouplement précité est monté coaxialement à l'axe de l'arbre moteur et traverse ce dernier en forme de manchon cylindrique de relativement courte longueur monté du côté de l'ensemble collecteur-balais opposé à l'espace précité.

Selon une autre caractéristique de l'invention, dans le cas d'un réducteur comme dispositif d'accouplement, un différentiel est accouplé au réducteur et logé dans l'espace précité avec l'arbre de sortie précité et un second arbre de sortie du réducteur formant une double sortie axiale.

Selon un premier mode de réalisation, les moyens de centrage et de maintien comprennent un tube cylindrique fixé sur le flasque précité et supportant les tôles rotoriques en forme de disques annulaires et deux collerettes extrêmes du tube cylindrique enserrant les tôles rotoriques.

Avantageusement, la collerette située du côté des balais précités est raccordée à un embout cylindrique dans lequel est fixé, par emmanchement soit fretté, soit collé, un manchon cylindrique de support du collecteur précité, du type plat.

Selon toujours une autre caractéristique de l'invention, deux flasques parallèles, solidaires de l'arbre moteur, sont prévus et le tube cylindrique précité, en tôle préformée, est fixé sur les deux flasques par soudage.

Selon un deuxième mode de réalisation, les moyens de centrage et de maintien comprennent un certain nombre de vis ou tirants de fixation des tôles rotoriques en forme de disques annulaires au flasque précité et traversant le paquet de tôles rotoriques et le flasque coaxialement à l'axe de l'arbre moteur.

Les vis ou tirants de fixation précités sont vissés dans un manchon cylindrique de support du collecteur du type plat et faisant office d'écrou de serrage des tôles rotoriques.

Selon un troisième mode de réalisation, les moyens de centrage et de maintien précités comprennent un certain nombre de tiges traversantes solidarisant le paquet de tôles rotoriques au flasque par leurs extrémités serties qui maintiennent également un embout cylindrique de support du collecteur.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels.

La figure 1 représente en coupe longitudinale un moteur électrique de traction conventionnel.

La figure 2 représente en demi-coupe longitudinale un moteur électrique suivant un premier mode de réalisation.

La figure 3 représente en demi-coupe longitudinale un moteur électrique suivant un second mode de réalisation de l'invention.

La figure 4 est une vue en coupe longitudinale d'un moteur électrique dans lequel est incorporé un ensemble réducteur-différentiel.

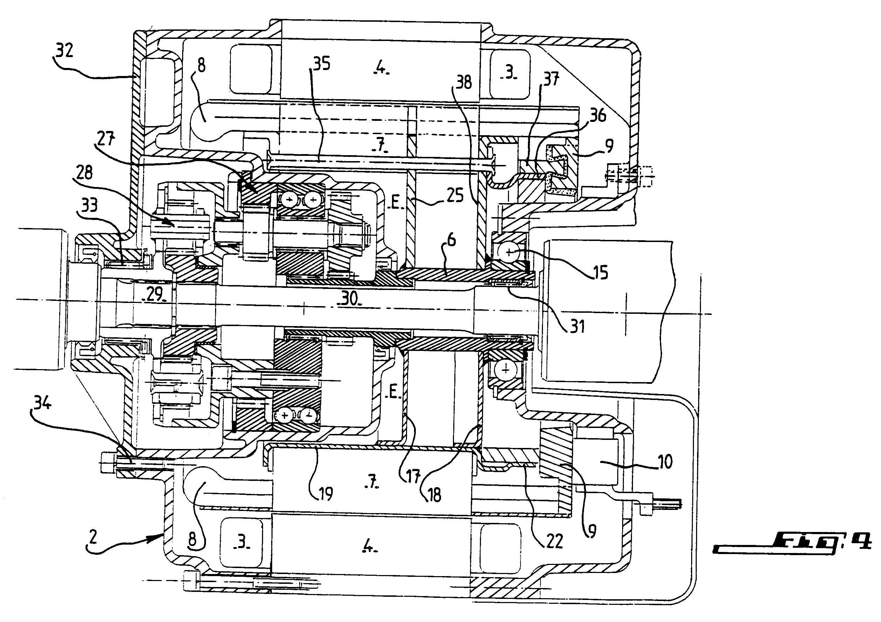

En se reportant à la figure 2, le moteur électrique de traction à courant continu destiné notamment à un véhicule automobile comprend un ensemble stator 1, solidaire du carter cylindrique 2 du moteur, à bobinage d'excitation 3 et paquet 4 de tôles statoriques jointives en forme de disques annulaires, (le stator peut aussi être carré, hexagonal,.....) un ensemble rotor 5 solidaire de l'arbre moteur 6 et constitué d'un paquet 7 de tôles rotoriques jointives en forme de disques annulaires sur lequel est bobiné un enroulement 8 et un ensemble collecteur 9-balais 10. Les balais 10 sont montés coulissants dans des porte-balais 11 solidaires d'une paroi radiale 2a de fermeture du carter 2 et maintenus élastiquement en contact électrique avec le collecteur 2a comme symbolisé en 12. L'arbre moteur 6 est maintenu par deux paliers 13 et 14 respectivement aux parois radiales 2a et 2b de fermeture du carter 2 par l'intermédiaire de roulements à billes 15 et 16.

Selon l'invention, le moteur électrique comprend de plus deux flasques parallèles 17, 18 solidaires, par exemple par soudage, de l'arbre moteur 6 perpendiculairement à ce dernier et munis de moyens de centrage et de maintien du paquet de tôles rotoriques 7 coaxialement à l'axe longitudinal de l'arbre moteur 6. Ces moyens de centrage et de maintien comprennent un tube cylindrique 19 fixé par exemple par soudage sur les deux flasques 17 et 18 et supportant le paquet de tôles rotoriques 7 et deux collerettes extrêmes 20 et 21 du tube 19 enserrant les tôles rotoriques du paquet 7. Les flasques 17, 18 sont positionnés relativement à l'arbre 6 et le tube 19 a un diamètre interne de façon à définir ou ménager un espace E permettant de loger un dispositif d'accouplement tel qu'un réducteur éventuellement associé à un différentiel ou un embrayage électromagnétique. Le tube 19 est réalisé par préformage d'une tôle et les flasques 17, 18 peuvent être jointifs ou ne constituer qu'un seul et unique flasque, dont le positionnement relatif à l'arbre 6 est réalisé par un épaulement 6a de ce dernier. La collerette 20 située du côté des balais 10 est raccordée à un embout cylindrique 22 dans lequel est fixé par exemple par emmanchement soit frêtté, soit collé, un manchon cylindrique 23 de support du collecteur 9 en forme de bague annulaire à face plane de contact électrique avec les balais 10. Le manchon 23 est solidarisé au collecteur 9 par une liaison tenon 23a-mortaise 9a circulaires en queue d'aronde avec interposition entre le tenon 23a et la mortaise 9a d'un isolant électrique 24.

Le procédé d'assemblage de l'ensemble rotor 5 et du collecteur 9 au tube 19 résulte de la description qui a été faite ci-dessus et n'a pas à être davantage détaillé sinon que les tôles rotoriques du paquet 7 sont enfilées jointivement sur le tube 19 et positionnées axialement par la collerette radiale 20 formant butée de positionnement et, une fois toutes les tôles rotoriques enfilées, la collerette 21 est formée par pliage de l'extrémité correspondante du tube 19 contre la dernière tôle rotorique opposée à celle en butée sur la collerette 20.

Suivant le deuxième mode de réalisation du moteur électrique représenté en figure 3 où les pièces communes à celles de la figure 2 et de structure identique portent les mêmes références, un flasque 25, solidaire par exemple par soudage de l'arbre moteur 6 et positionné relativement à ce dernier par l'épaulement 6a, porte le paquet 7 de tôles rotoriques en forme de disques annulaires centré coaxialement à l'arbre 6 par des tirants ou vis de fixation 26 traversant le paquet 7 et le flasque 25 coaxialement à l'arbre 6. Le flasque 25 est représenté disposé de façon à être enserré approximativement entre deux demi-paquets de tôles rotoriques mais il est bien évident qu'il peut être positionné relativement à l'arbre 6 de façon à être situé plus à gauche relativement à la figure 3 pour définir un espace E encore plus important de logement d'un réducteur associé éventuellement à un différentiel ou d'un embrayage électromagnétique. Cet espace E est ainsi défini par le flasque 25, le diamètre interne des tôles rotoriques, le diamètre interne de l'enroulement 8 et la paroi 2b. Les tirants ou vis de fixation 26 ont leurs extrémités opposées aux têtes de retenue des tôles rotoriques qui sont vissées dans le manchon cylindrique 23 de support du collecteur 9, lequel manchon fait ainsi office d'écrou de serrage et de maintien des tôles rotoriques au flasque 25.

La figure 4 représente l'intégration d'un dispositif mécanique dans l'espace ou logement E et constitué par un réducteur 27 mécaniquement accouplé à l'arbre moteur 6 du moteur électrique et par un différentiel 28 mécaniquement accouplé au réducteur 27 de façon à entraîner conjointement les deux arbres de sortie 29 et 30 portant chacun une roue du véhicule à des vitesses angulaires pouvant différer librement. Les deux arbres de sortie 29 et 30 constituent ainsi une double sortie axiale du réducteur 27 et l'arbre de sortie 30 est monté coaxialement dans l'arbre tubulaire 6 de relativement courte longueur monté du côté de l'ensemble collecteur 9-balais 10 opposé à l'espace E dans lequel est logé l'ensemble réducteur 27-différentiel 28. Bien entendu, l'arbre de sortie 30 est monté rotatif dans l'arbre 6 par l'intermédiaire d'un roulement à aiguilles 31 tandis que l'arbre de sortie 29 est monté rotatif relativement à un palier de support constitué par un couvercle 32 de fermeture de l'espace E par l'intermédiaire d'un roulement à aiguilles 33, le couvercle 32 étant fixé à l'aide de vis de fixation 34 au carter 2 du moteur électrique. Les structure et fonctionnement du réducteur 27 et du différentiel 28 étant connus en soi, ils n'ont pas à être détaillés davantage. Dans le cas d'un moteur électrique par roue du véhicule, seul le réducteur 27 sera prévu dans l'espace E et il est clair qu'il est possible de prévoir à la place du réducteur 27 un embrayage électromagnétique selon les besoins.

La figure 4 représentant en fait deux demi-vues différentes où la demi-vue supérieure est semblable au mode de réalisation de fixation des tôles rotoriques du paquet 7 représenté en figure 3 et la demi-vue inférieure correspond au mode de réalisation de la figure 2. En se référant à la demi-vue supérieure de la figure 4, on remarquera que l'assemblage et le centrage du paquet 7 de tôles rotoriques au flasque 25 est effectué par des tiges 35 traversantes coaxiales à l'arbre moteur 6 et retenant les tôles rotoriques par leurs extrémités serties. L'extrémité sertie du côté du collecteur 9 maintient également un embout cylindrique 36 correspondant à l'embout 22 de la figure 2 et sur lequel est fixé, par exemple par emmanchement soit frêtté, soit collé, un manchon cylindrique 37 de support du collecteur 9, l'assemblage du manchon 37 au collecteur 9 étant identique à celui représenté aux figures 2 et 3. La demi-vue supérieure montre de plus la présence d'un second flasque 38 parallèle au flasque 25, solidaire par soudage de l'arbre 6, et enserré par extrémité sertie de la tige 35 entre le paquet de tôles rotoriques et une partie radiale raccordée à l'embout 36. Le mode de réalisation de la demi-vue inférieure de la figure 4 étant identique à celui de la figure 2, il n'a pas à être décrit avec la seule différence, comme pour la demi-vue supérieure, que les flasques 17, 18 et le flasque 25 sont davantage rapprochés du collecteur 9 par rapport aux figures 2 et 3 de façon à agrandir le logement E.

Le moteur électrique de l'invention tel que représenté aux figures 2 à 4 résout ainsi le problème d'encombrement en longueur en étant agencé de façon à pouvoir y implanter un réducteur associé éventuellement à un différentiel ou un embrayage électromagnétique. En plus de la diminution de l'encombrement en longueur, le montage proposé du moteur électrique permet à la fois un allégement et un temps de montage réduit.

**Revendications**

1. Moteur électrique de traction à courant continu destiné notamment à un véhicule automobile comprenant un ensemble stator (1) solidaire d'un carter (2), un ensemble rotor (5) solidaire de l'arbre moteur (6) comprenant un paquet (7) de tôles rotoriques jointives et un ensemble collecteur (9), balais (10) comprenant au moins un flasque (17, 18, 25) solidaire de l'arbre moteur (6) et muni de moyens (19, 20, 21, 26, 35) de centrage et de maintien des tôles rotoriques coaxialement à l'arbre moteur (6), le flasque (17, 18, 25) et les moyens (19, 20, 21, 26, 35) étant disposés relativement à l'arbre moteur (6) de façon à ménager dans le carter (2) concentriquement à l'arbre moteur (6) un espace (E) permettant de loger un dispositif d'accouplement réducteur, caractérisé en ce qu'il comprend un différentiel (28) accouplé au réducteur (27) et logé dans l'espace (E), l'arbre de sortie (30) du différentiel (28) étant monté coaxialement à l'axe de l'arbre moteur (6) et traversant cet arbre en forme de manchon cylindrique relativement de courte longueur, monté du côté de l'ensemble collecteur (6) balais (10) opposé à l'espace (E), un second arbre de sortie (29) du différentiel (28) formant avec l'arbre de sortie (30) une double sortie axiale.

2. Moteur électrique selon la revendication 1, caractérisé en ce que les moyens de centrage et de maintien précités comprennent un tube cylindrique (19) fixé sur le flasque (17, 18) et supportant le paquet (7) de tôles rotoriques en forme de disques annulaires et deux collerettes extrêmes (20, 21) du tube cylindrique (19) enserrant les tôles rotoriques.

3. Moteur électrique selon la revendication 1 ou 2, caractérisé en ce qu'à la collerette (20) située du côté des balais (10) précités est raccordé un embout cylindrique (22) dans lequel est fixé par exemple par emmanchement soit fretté, soit collé, un manchon cylindrique (23) de support du collecteur (9) précité, du type plat.

4. Moteur électrique selon l'une des revendications précédentes, caractérisé en ce qu'il comprend deux flasques parallèles (17, 18) solidaires de l'arbre moteur (6) et en ce que le tube cylindrique (19) précité, en tôle préformée, est fixé sur les deux flasques (17, 18) par soudage.

5. Moteur électrique selon la revendication 1, caractérisé en ce que les moyens de centrage et de maintien précités comprennent un certain nombre de vis ou tirants (26) de fixation du paquet (7) de tôles rotoriques en forme de disques annulaires au flasque (25) précité et traversant le paquet (7) de tôles rotoriques et le flasque (25) parallèlement à l'axe de l'arbre moteur (6).

6. Moteur électrique selon la revendication 5, caractérisé en ce que les vis ou tirants de fixation (26) précités sont vissés dans un manchon cylindrique (23) de support du collecteur (9) du type plat et faisant office d'écrou de serrage des tôles rotoriques du paquet (7).

7. Moteur électrique selon la revendication 1, caractérisé en ce que les moyens de centrage et de maintien précités comprennent un certain nombre de tiges (35) traversantes solidarisant le paquet (7) de tôles rotoriques au flasque (25) par leurs extrémités serties qui maintiennent également un embout cylindrique (36) de support du collecteur (9).

Fig.2

Fig.3

Fig.1

Fig. 4

**Office européen des brevets**

# RAPPORT DE RECHERCHE EUROPEENNE

Numero de la demande

EP    91 40 1355

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 274 023 (LAMPREY) <br> * colonne 2, ligne 18 - colonne 6, ligne 2; figures 1-7 * | 1 | H02K7/116 <br> H02K7/108 <br> H02K1/30 <br> H02K13/00 |
| Y | DE-A-3 826 142 (KOYO SEIKO) <br> * colonne 2, ligne 67 - colonne 5, ligne 35; figures 1-4 * | 1 | |
| A | US-A-2 514 460 (TUCKER) <br> * colonne 1, ligne 1 - colonne 4, ligne 18; figures 1-4 * | 1,2,3 | |
| A | US-A-2 450 290 (MAXWELL) <br> * colonne 1, ligne 33 - colonne 3, ligne 36; figures 1,2 * | 1,2,5 | |
| A | US-A-2 795 711 (MILLER) <br> * colonne 1, ligne 46 - colonne 3, ligne 41; figure 1 * | 1,2 | |
| A | FR-A-709 935 (WESTINGHOUSE) <br> * page 2, ligne 15 - page 3, ligne 17; figures 1-4 * | 4 | **DOMAINES TECHNIQUES RECHERCHES (Int. Cl.5)** |
| A | CH-A-671 487 (BROWN BOVERI) <br> * page 3, colonne de droite, ligne 1 - ligne 6; figures 1,2 * | 6 | H02K |
| A | FR-A-2 349 991 (LUCAS) <br> * page 4, ligne 5 - page 5, ligne 7; figure 1 * | 7 | |

Le présent rapport a été établi pour toutes les revendications

| Lieu de la recherche | Date d'achèvement de la recherche | Examinateur |
|---|---|---|
| LA HAYE | 02 OCTOBRE 1991 | TIO K.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)